# EUROPEAN PATENT APPLICATION

(11) **EP 4 555 859 A1**
(43) Date of publication of application: **21.05.2025**
(21) Application number: 24213095.3
(22) Date of filing: 14.11.2024
(51) Int. Cl.: A01K 93/00, B63B 22/18, B63B 43/14, B63C 7/26

(54) **A FISHING LOCATION MARKING DEVICE**

(30) Priority: 14.11.2023 GB 202317444
(71) Applicant: Catchum 88 Limited, Hockley SS5 5LR (GB)
(72) Inventor: Stanley, Neil, WITHAM, CM8 1FF (GB)
(74) Representative: Dummett Copp LLP

(57) **Abstract**

The present invention relates to a fishing location marking device or marking device otherwise known as a swim marker 10. The present invention provides a swim marker 10 which is simple, compact, robust and does not rely on a fixed length of anchor line and varies the length of the anchor line depending upon the depth of the water. The swim marker 10 comprises a floating body 12 and anchor line retaining means 17 wherein an anchor line is arranged, in use, to extend from the floating body 12 to a submerged weighted component in order to retain the floating body 12 in a marking position on a surface of a body of water relative to the weighted component. The floating body 12 comprises a first arm 20, a second arm 21, a third arm 22 and a fourth arm 23. The floating body 12 also comprises a body portion 16 providing an anchor line spooling portion comprising a circumferential spooling surface on a central portion of the floating body 12. The first arm 20, the second arm 21, the third arm 22 and the fourth arm 23 extend radially outwardly from the central portion 16 and form a substantially X-shaped body. The anchor line retaining means 17 fixes a length of anchor line extending between the anchor line retaining means 17 and the weighted component, and wherein the circumferential spooling surface is fixed and unmovable relative to the arms 20, 21, 22, 23.

## Description

### FIELD OF THE INVENTION

This invention relates to a fishing location marking device, a fishing assembly comprising a fishing location marking device, an anchor line and a weighted component and a method of marking a fishing location.

### BACKGROUND TO THE INVENTION

Fishing markers in the form of swim marker floats or buoys are well known for mapping a fishing area (also known as a swim) within a body of water, such as a river, pond, lake or the like.

A swim marker generally comprises a hollow floating body formed from a plastics material, which has been formed from a blow moulding process. The swim marker body is typically formed from a hollow plastics vessel, which is attached to one end of an anchor line (or braid). The hollow plastics vessel may be in the form of a plastic bottle or a cylindrical plastics body of pen. The other end of the anchor line is attached to a submerged weight, which holds the floating marker in position. Accordingly, the marker aims to indicate a fishing area. Prior to being deployed on the surface of a body of water it is difficult to accurately determine a fixed length of the anchor line required to accurately locate the floating body directly above the submerged weight. For example, if the length is too long then the marker will not locate over the submerged weight and will also drift around the submerged weight. In addition, if the fixed length of the anchor line is too short then there would be no anchoring point and the marker together with the weight would simply be free to drift from the initial location.

An angler may utilise a swim marker which comprises a hollow substantially H-shaped floating body which is formed from a blow moulding process. An anchor line is attached at one end to a middle portion which extends between two legs of the H-shaped floating body. A weight is attached to the opposite end of the anchor line which, in use, is submerged and holds the floating H-shaped body in position. The anchor line is spooled around the central section of the H- shaped body. Once the angler has deployed the floating body upon a body of water, the weight will subsequently sink and unspools the anchor line from the middle section of the floating body until the weight lands on the bottom of the body of water. During this unspooling action, the H-shaped body revolves and rotates on the surface of the water. The unspooling of the anchor line causes the anchor line to unravel from the middle section of the floating body and rotates the floating body. A problem with a H-shaped floating body is that wave action, currents, winds may cause the floating body to rotate or revolve which thereby causes the anchor line to lengthen. This lengthening of the anchor line increases the distance of the floating body from the submerged anchor weight, which results in the floating body no longer marking the fishing spot accurately.

It is an aim of the present invention to overcome at least one problem associated with the prior art whether referred to herein or otherwise.

### SUMMARY OF THE INVENTION

According to a first aspect of the present invention there is provided a fishing location marking device comprising a floating body and anchor line retaining means wherein an anchor line is arranged, in use, to extend from the floating body to a submerged weighted component in order to retain the floating body in a marking position on a surface of a body of water relative to the weighted component, the floating body comprising:
a first arm, a second arm, a third arm and a fourth arm,
a body portion providing an anchor line spooling portion comprising a circumferential spooling surface on a central portion of the floating body,
wherein the first arm, the second arm, the third arm and the fourth arm extend radially outwardly from the central portion and form a substantially X-shaped body,
wherein the anchor line retaining means fixes a length of anchor line extending between the anchor line retaining means and the weighted component, and
wherein the circumferential spooling surface is fixed and unmovable relative to the arms.

Preferably the anchor line retaining means being is located on a surface between the first arm and the third arm.

Preferably the circumferential spooling surface locates around a central section of the central portion of the floating body and comprises a first spooling surface area located between the first arm and the second arm and also a spooling surface area located between the third arm and the fourth arm.

Preferably the first spooling surface area is generally concave and may provide a generally U-shaped surface. Preferably the second spooling surface area is concave and may provide a generally U-shaped surface.

The first spooling surface area may smoothly transition with outer surfaces of the first arm and the second arm. The second spooling area may smoothly transition with outer surface of the third arm and the fourth arm.

The first arm and the second arm may provide guide surfaces to guide the anchor line between the first arm and the second arm and towards the first spooling surface area. The third arm and the fourth arm may provide guide surfaces to guide the anchor line between the third arm and the fourth arm and towards the second spooling surface area.

Preferably the spooling surface is arranged to spool the anchor line about a spooling axis and wherein a location of the anchor line retaining means is positioned along the spooling axis and/or at least in the same plane as the spooling axis.

Preferably the anchor retaining means is located in a first plane and the spooling surface is located along a spooling plane, wherein the spooling plane is perpendicular to the first plane.

A distal end of each arm may be spaced further from the spooled plane compared to the first plane.

Preferably the spooling surface is located along a spooling plane and the anchor line retaining means is spaced from the spooling plane.

The spooling plane may define a central plane with half of the X-shaped body extending to a first lateral side and a second half of the X-shaped body extending to a second lateral side. Preferably the X-shaped body is symmetrical about the spooling plane. Preferably the first arm and the third arm extend to the first lateral side and the second and the fourth arm extend to the second lateral side.

A front longitudinal surface of the central portion of the X-shaped body and a rear longitudinal surface of the X-shaped body may provide spooling surfaces about which the anchor line is spooled and the anchor line retaining means may be provided on a lateral side of the central portion of the X-shaped body.

The angle between the first arm and the second arm may be greater than the angle between the first arm and the third arm. The anchor line may be arranged to be spooled between the first arm and the second arm. The anchor line retaining means may be located between the first arm and the third arm. The angle between the third arm and the fourth arm may be greater than the angle between the third arm and the first arm. The anchor line may be arranged to be spooled between the third arm and the fourth arm. The angle between the first arm and the third arm may be substantially the same as the angle between the second arm and the fourth arm.

Preferably each arm extends radially along a central associated axis. Preferably each arm extends generally linearly along the associated central axis.

Each arm may have a first surface facing towards a spooling side and an opposite second surface facing away from the spooling side and/or towards a second surface of an adjacent arm. Each arm may have a first surface facing towards a first surface of a first adjacent arm and a second surface facing towards a second surface of a second adject arm. The anchor line may be spooled between the first surfaces. The anchor line retaining means may be located between the second surfaces. Preferably the angle between the first arm and the first adjacent arm is greater than the angle between the arm and the second adjacent arm. The angle between the central axis of the first arm and the central axis of the first adjacent arm may be greater than the angle between the first arm and the second adjacent arm.

The X-shaped body may have rotational symmetry of order two about a plan view central axis.

Each arm may have the same radial length.

Each arm may have a rounded distal end.

Each arm may have a central (longitudinal) axis which forms an angle of less than 45 degrees with a spooling axis. Preferably the angle is greater than 25 degrees and more preferably greater than 30 degrees. The angle may be less than 40 degrees. The angle may be substantially 35 degrees. Accordingly, the angle between the first arm and the second arm may be substantially 110 degrees and the angle between the first arm and the third arm may be 70 degrees.

The anchor line retaining means may be configured to prevent or inhibits unspooled anchor line from being spoolable around the spooling surface when the floating body rotates about the spooling axis.

The anchor line retaining means may comprise a clip which may comprise a line clip.

The anchor line retaining means may be arranged to grip a part of an anchor line.

The anchor line retaining means may be operable to adjust the length of an anchor line extending between the floating body and a weighted component.

The anchor line retaining means may be integral with the floating body. Preferably the floating body and the anchor line retaining means are integral and are formed as a single unitary component. Preferably the single unitary component comprises a moulded component.

The anchor line retaining means may provide a guide path for the anchor line extending from the spooling surface to one side of the floating body and then towards the submerged weight.

The anchor line retaining means may comprise a first retaining member and a second retaining member with a passageway defined therebetween. The first member and the second member may be urged and/or biased towards each other. A part of the first member may be arranged to contact a part of the second member. The passageway may be defined between the un-contacting portions of the first retaining member and the second retaining member. A distal end of the first member may be arranged to contact a distal end of the second member. Each member may comprise a stem extending from the central portion of the X-shaped body to a respective distal end. Preferably each stem extends from a surface of the central portion located between the first arm and the third arm. The passageway may be defined between the stems of the retaining members.

Each member may comprise a resilient member. Each member may be arranged to resilient flex to define an inlet whereby a part of the anchor line can be inserted into the passageway.

A section of the anchor line may be inserted between the passageway defined by the stems in order to fix the length of the anchor line extending between the floating body and the weighted component. Preferably this insertion prevents the anchor line from being spoolable around the spooling surface if the floating body rotates about the spooling axis.

A section of the anchor line may be wrapped around outer surfaces of the stems.

The anchor line retaining means may comprise two adjacent fingers arranged to extend from a side of the floating body. The two fingers may be spaced apart from each other to provide a gap for retaining or fastening the anchor line. Each finger may comprise a bulbous distal end. Each bulbous distal end may be in contact with a bulbous end of an adjacent finger. The anchor line retaining means may facilitate the fastening of the anchor line about one or more fingers.

The anchor line retaining means may provide a fulcrum about which the floating body is rotatable from a first position at which the floating body is flat, to a second position at which the body is up-ended.

The X-shaped body may comprise the first arm and the second arm which are symmetrically identical to the third arm and the fourth arm about a first plane. The X-shaped body may comprise the first arm and the fourth arm which are symmetrically identical to the second arm and the third arm about a second plane.

A first angle between the first arm and second arm is greater than a second angle between the second arm and third arm.

The floating body may be formed from a single plastics moulding.

The floating body may be formed from two symmetrically identical plastics mouldings attached together.

The floating body may be formed from a high visible plastics material.

According to a second aspect of the present invention there is provided a fishing assembly comprising a fishing location marking device, an anchor line and a weighted component, the fishing location marking device comprising a floating body and anchor line retaining means wherein the anchor line is arranged, in use, to extend from the floating body to the submerged weighted component in order to retain the floating body in a marking position on a surface of a body of water relative to the weighted component, the floating body comprising:
a first arm, a second arm, a third arm and a fourth arm,
a body portion providing an anchor line spooling portion comprising a circumferential spooling surface on a central portion of the floating body,
wherein the first arm, the second arm, the third arm and the fourth arm extend radially outwardly from the central portion and form a substantially X-shaped body,
wherein the anchor line retaining means fixes a length of the anchor line extending between the anchor line retaining means and the weighted component, and
wherein the circumferential spooling surface is fixed and unmovable relative to the arms.

According to a third aspect of the present invention there is provided a method of marking a fishing location with a fishing assembly comprising a fishing location marking device, an anchor line and a weighted component, the fishing location marking device comprising a floating body and anchor line retaining means, the floating body comprising:
a first arm, a second arm, a third arm and a fourth arm,
a body portion providing an anchor line spooling portion comprising a circumferential spooling surface on a central portion of the floating body,
wherein the first arm, the second arm, the third arm and the fourth arm extend radially outwardly from the central portion and form a substantially X-shaped body,
wherein the anchor line retaining means fixes a length of the anchor line extending between the anchor line retaining means and the weighted component, and
wherein the circumferential spooling surface is fixed and unmovable relative to the arms,
the method comprising:
   positioning the fishing location marking device on a surface of water and allowing the weighted component to rest on a submerged surface at a fishing location,
   adjusting the length of the anchor line extending from the floating body to the submerged weighted component in order to retain the floating body in a marking position on a surface of a body of water relative to the weighted component.

### BRIEF DESCRIPTION OF THE DRAWINGS

The present invention will now be described by way of example only with reference to the drawing that follows, in which:

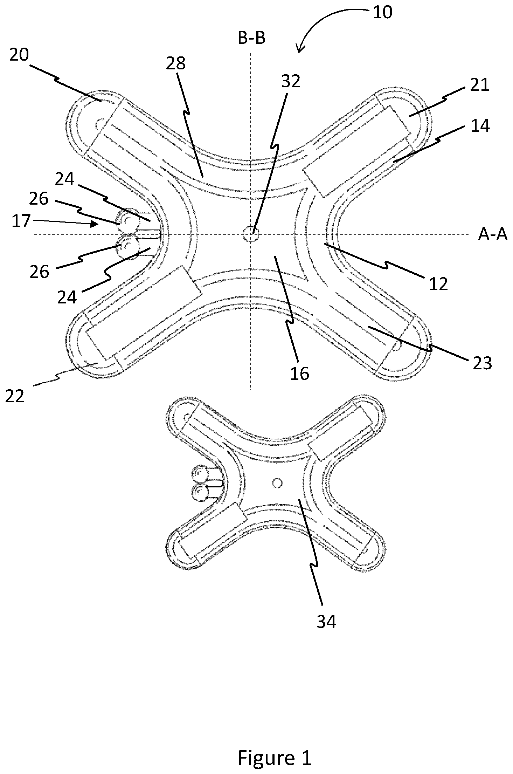

Figure 1 is a plan view of two markers of different dimensions which are in accordance with the preferred embodiment of the invention.

### DESCRIPTION OF THE PREFERRRED EMBODIMENTS

The present invention relates to a fishing location marking device or marking device otherwise known as a swim marker 10. The present invention provides a swim marker 10 which is simple, compact, robust and does not rely on a fixed length of anchor line and varies the length of the anchor line depending upon the depth of the water. The present invention is for use in accurately indicating defined and limited areas where fish may regularly feed, or where anglers are baiting the area to attract fish, for example a fishing swim located in a designated area (also known as a peg) on a bank of a river, pond, reservoir or lake etc.

As shown in Figure 1, the swim marker 10 comprises a floating body 12 or buoyant body. The floating body 12 comprises four arms 14 of equal length which extend radially from a central body portion 16. Each arm 14 extends linearly at an angle of 35 degrees relative to a central horizontal plane A-A (a first plane). This also defines an axis of rotation for spooling and unspooling the anchor line (a spooling axis) as will be explained. The four arms 14 are symmetrical about this plane/axis A-A. Specifically, the arms/floating body has rotational symmetry of order two in plan view about a central axis (as shown in Figure 1).

Each arm 14 is substantially cylindrically shaped and extends linearly from a central body portion 16 to a distal domed shaped tip. Each arm 14 seamlessly extends into the central body portion 16. The floating body 12 is naturally buoyant and comprises a hollow cavity which provides the required buoyancy for the floating body 12 to float upon a body of water.

The plastics material of the floating body 12 comprises a highly visible colour, such as orange, yellow or the like, which enables an angler to easily spot the swim marker 10 when it is floating upon a body of water.

In the preferred embodiment of the invention, the four arms 14 and central body portion 16 are integral and provide a one-piece floating body 12, which is formed in a substantially X-shaped configuration. The four arms 14 comprises two upper arms 20, 21 which are symmetrically identical to each other about plane B-B. Similarly, the four arms 14 also comprises two lower arms 22, 23 which are symmetrically identical to each other about plane B-B. All four arms 20, 21, 22, 23 extend radially outwardly (in the same plane) from a central axis 32 defined in the centre of the central body portion 16. The first arm 20 and the fourth arm 23 are diametrically opposite and both extend along a first common axis (diameter line passing through the centre). Similarly, the second arm 21 and the third arm 22 are diametrically opposite and both extend along a second common axis (diameter line passing through the centre). The two common axes intersect at the centre of the body portion 16 and the angle between the first common axis and the second common axis may be in the 110 degrees (for example, greater than 90 degrees and in the region of 100 degrees to 120 degrees or 130 degrees). In some embodiments, the axis of the first arm 20 may be offset (but may be parallel with) the axis of the diametrically opposed fourth arm 23 and the axis of the second arm 21 may be offset (but may be parallel with) the axis of the diametrically opposed third arm 22.

As shown in Figure 1, the longitudinal extent of the floating body 14 extends from the distal tips of the first arm 20 and the second arm 21 to the distal tips of the third arm 22 and the fourth arm 23. Accordingly, with this definition, the X-shaped body has a greater lateral width than longitudinal length.

As mentioned above, the first arm 20, the second arm 21, the third arm 22 and the fourth arm 23 extend radially outwardly from the central portion 16 and form a substantially X-shaped body. This substantially X-shaped body may include the arms extending at any angle relative to each other and, in one example, the arms may be at 90 degrees to each other such that the X-shaped body form a substantially +-shaped body. In addition, the central body portion 16 may have an elongate section such that the first arm 20 and the fourth arm 23 extend radially from a first point provided by a first end of the elongate section and the second arm 21 and the third arm 23 extend form a second point of the elongate section. The first point may be provided at or towards the first end of the elongate section and the second point may be provided at or towards the second end of the elongate section. In an alternative example, the first arm 20 and the second arm 21 may extend radially out from the first point and the third arm 22 and the fourth arm 23 may extend from the second point. In the preferred embodiments all of the arms radiate outwardly in a radial direction from a single common point defined centrally by the central body portion 16. The arms are angled and not parallel (specifically the first arm 20 is angled and not parallel to the second arm 21 and the third arm 22 is angled and is not parallel to the fourth arm 23) to the central body portion 16 providing the spooling section.

In a first larger embodiment, the length of the swim marker may be approximately 138mm and the width may be approximately 190mm. In a second smaller embodiment, the width may be approximately 102mm and the length may be approximately 77mm.

The floating body 12 is formed as a single plastics component. In particular, the single plastics component is provided by a plastics blow moulding process. The anchor line retaining means 17 in the form of a line clip (explained in more detail below) is also integral with the floating body and forms a part of the single (unitary) plastics component.

Alternatively, the floating body 12 may formed from two plastics portions or half-shells which are sealed together. The two plastics components are provided by a plastics blow moulding process. The two plastics components comprise an upper body component 28 formed in a substantially X-shaped configuration 28, and a lower body component formed in a substantially X-shaped configuration. Both the upper and lower body components are symmetrical about a central horizontal axis. Both the upper and lower body components are bonded together via a central horizontal joint with either an adhesive or a weld suitable for plastics material. In such an arrangement, the anchor line retaining means in the form of a line clip is integral with one portion of the floating body. Such an integrally formed retaining means provides a robust device which is less likely to fail or for the retaining means to be inadvertently lost, dislodged or broken off.

The swim marker 10 includes a line clip which Is provided by two retaining members in the form of protuberances. In the preferred embodiment, the central body portion 16 comprises two protuberances 24 which extend linearly along and parallel to the central horizontal plane A-A. Each protuberance 24 extends to a distal bulbous tip 26. The two protuberances 24 are symmetrically identical to each other about the central horizontal plane A-A. The protuberances 24 may comprise resilient members and may be resiliently or flexibly attached to the central body portion 16. The protuberances may be moved apart and may naturally urge back together to form a clip/grip type arrangement for retaining the line between the two protuberances. In some embodiments, the anchor line is not physically gripped directly between the two protuberances but may be retained within a space defined between the two protuberances such that the line cannot be unspooled any further.

Accordingly, the present invention allows anglers to mark a fishing spot in a body of water such as a lake, river, estuary or the like where a fish may regularly feed or where anglers are baiting an area to attract fish. The angler typically accesses the fishing spot by either wading, a boat, or a remotely operated bait boat. Typically, the angler will initially use a boat to move out to and locate above or near the intended fishing spot/location or mark. The angler is then able to manually position the swim marker 10 accurately at the desired position. In addition, the angler is able to measure/test the depth of the water at this desired position and to consequently set the length of the anchor line to retain the swim marker 10 in a location directly above or around the desired fishing spot.

The present invention is particularly for use by an angler for attaching the swim marker 10 to a weighted anchor line having a weighted component (e.g. a weight/lead) secured thereto which is deployed to the bottom of a fishing spot (a fishing swim) within a river or reservoir etc. The anchor line is typically formed from either a mono-filament line or braided material.

In use, the anchor line is spooled around the floating body 12 and the length of the extending anchor line is fixed by the line clip provided by the two protuberances 24. In particular, the anchor line is spooled on to an integral (fixed/unmovable) outer circumferential surface of the X-shaped body and specifically on a first spooling surface provided between the first arm 20 and the second arm 21 and second spooling surface between the third arm 22 and the fourth arm 23. Each arm guides the anchor line on to the respective spooling surface. Each spooling surface is concave or generally U-shaped to aid the spooling/unspooling of the anchor line. The length of the extending anchor line is therefore fixed and spans between the submerged weight, and the floating body 12. This fixed line length enables the floating body 12 to float substantially directly above the submerged weight, thereby accurately marking a required fishing spot to the angler. By maintaining the fixed line length, the floating body 12 is not capable of drifting away from the submerged weight. If the floating body 12 does drift away from the submerged weight, it will no longer provide an accurate indication of the required fishing spot.

Once the depth of the water has been measured or estimated the extending length or unspooled length of the anchor line can then be fixed. Typically, the angler will drop the attached weight from a boat at the desired fishing spot until the weight rests on the bottom (i.e. lake/river/canal bed). In particular, the anchor line is spooled around the central portion of the floating body 14 which acts or functions as a reel for the anchor line as the weight descends. The spooled amount or the unspooled length is then fixed by securing the anchor line to the line clip provided by the protuberances 24. Again, this fixing of the length of the anchor line may be undertaken by the angler in the boat at the fishing spot. The anchor line engages and cooperates with the two protuberances 24 which extend from the left side of the central body portion 16. For example the anchor line may warp around an outer surface of the stems of the protuberances 24 and also extend between the protuberances 24 such that the anchor line cannot be simply unspooled from the central body by rotating or revolving the swim marker 10. For example, when on the surface of the water, the conditions (wind, current, waves etc.) may cause the swim marker 10 to flip over or even revolve/rotate. Such actions/movements will not cause the length of the unspooled length of the anchor line to extend and it will remain constant. As mentioned above, a prior art device with no fixing system would simply unspool and increase the length of the unspooled anchor line thereby causing the swim marker to drift from the desired location. In addition, the fixing system and the swim marker 10 does not include any moving parts as could be provided by a revolving hub component to provide a reel spool on the swim marker. Such a mechanism would cause problems with the various components and increase the likelihood of failure. In particular, the circumferential spooling surface is fixed and unmovable relative to the arms 20, 21, 22, 23. In this arrangement, the arms 20, 21, 22, 23 must revolve and rotate as the anchor line is spooled or unspooled. Accordingly, the present invention provides a simple device and minimises the production and manufacturing costs.

Once the length of the anchor line has been fixed by the clip, the weight can again be released to rest freely on the bottom such that the swim marker 10 will now be securely retained in position by the grounded weight. The angler can then return in the boat to their fishing position (i.e. the river/lake/canal bank) to commence the fishing session whilst the swim marker 10 will be safely retained and held in position relative to the fishing spot.

When little, or no wave action is present, the swim marker will lay flat on the water. The highly visible plastics material will enable the angler to easily determine position of the marker and its associated fishing spot.

The swim marker 10 can be easily retrieved at the end of the fishing session, for example by the angler using a boat to manually retrieve the device.

In an alternative system, an angler may deploy one or more swim markers 10, wherein each swim marker 10 is initially stowed within a remotely operated bait boat prior to marking the required fishing spot. Each swim marker 10 comprises an anchor line having a length that is sufficient to span the water depth between the floating swim marker and the attached submerged weight. When not in use, the length of anchor line is wrapped about a central portion of the swim marker 10.

Once the angler has remotely positioned the bait boat above the required fishing spot, a panel within the bait boat is opened remotely. The open panel allows at least one swim marker 10 to fall out of a storage compartment within the bait boat. As the swim marker 10 sinks at the required location, the deployment of the submerged weight will unravel the anchor line from the swim marker 10. The anchor line is paid out from the swim marker 10 until the submerged weight drops to the bottom of the required fishing spot. Once at the required depth, the submerged weight will stop pulling the attached anchor line, which subsequently stops the anchor line unravelling from the swim marker 10.

Known swim markers comprising a floating body with an H-shaped configuration. The H-shaped has a known problem in that the anchor line sometime does not unravel from the swim market when it is submerged. When this problem occurs, the swim marker 10 is then irretrievably lost within the body of water. In addition, with a H-shaped marker, the anchor line extends directly down from the spooled portion such that any rotation of the H-shaped body causes the anchor line to either spool or unspool from this spooled portion. This spooled body portion has a relatively large circumference such that a single flip over of the swim marker may cause a significant amount of anchor line to be spooled or unspooled. As it will be appreciated, just a few revolutions of such a swim marker will cause the weight to be lifted from the bottom or will cause the swim marker to drift a significant distance from the location point.

The X-shaped configuration of the present invention provides the effect of enabling the swim marker 10 to rotate more freely than other known configurations, thereby ensuring the anchor line is paid out from the swim marker 10 so that the floating body 12 is visible on the surface of the required fishing spot. However, this action may result in the device being more likely and prone to flipping over on the surface and/or revolving to increase an unfixed length of the anchor line. Accordingly, the clip mechanism is provided to prevent this undesirable effect from occurring. In particular, even if the swim marker 10 does flip over or rotate then then the fixed anchor line length will not increase. Since the free length of the anchor line extends off centre due to the protuberances, then any rotation of the swim marker 10 does not naturally cause the anchor line to spool around the central body portion. In addition, the length of the anchor line cannot increase due to the fixation of the anchor line with the clip formed by the protuberances.

The force exerted by the submerged weight also acts on a lateral side of the swim marker 10 such that the tendency would be to try and flip the swim marker 10 laterally. This therefore does not cause the anchor line to spool or unspool from the spooling section since this is located longitudinally rather than laterally. Furthermore, the arms 20, 21, 22, 23 extend laterally further than longitudinally. Accordingly the natural resistive force created by the water against the swim marker 10 flipping/rotating laterally is greater that it is longitudinally. The longitudinally flipping/rotation is more desired to allow the anchor line to be naturally unspooled during the initial deployment whereas the grater resistance against the lateral flipping/rotation is advantageous to prevent the undesirable flipping/rotation of the swim marker 10 once the anchor line is fully unspooled.

In the present invention, to prevent the anchor line from spooling/unspooling due to the undesirable rotation of the swim marker, the line clip is provided between two adjacent arms which together do not form a spooling portion therebetween, i.e. the line clip is provided between the first arm 20 and the third arm 22 whereas the spooling portion is defined between the first and second arms 20, 21 and the third and fourth arms 22, 23. The line clip therefore is provided on a first plane (A-A) which is perpendicular to the plane of spooling/unspooling (B-B).

As shown in Figure 1, the spooling/unspooling plane B-B also provides a first axis about which the swim marker could be rotatable. Similarly the first plane A-A also provides a second axis which is the main spooling/unspooling axis about which the swim marker is rotatable. The arms are angled to extend further in the direction from the axis B-B such that rotation of the swim marker is encouraged to be about the axis spooling/unspooling axis A-A. This allows the anchor line to naturally unspool when initially assessing the depth of the water. The X-shaped body is therefore advantageous and the free falling of the weight causes the swim marker to rotate about one axis (A-A). However, once the anchor line is clipped between the first and fourth arms then the weight pulls the swim marker 10 downwardly and would tend to urge the swim marker 10 to rotate about the other axis (B-B) and the additional length to the arms in this direction discourages and prevents the swim marker 10 from rotating about this axis as easily as a prior at device in which the weight would tend to urge a swim marker to subsequently rotate about the same spooling/unspooling axis. Accordingly, in a prior art device, if the spooling/unspooling is smooth then the undesirable extra spooling/unspooling will not be significantly hindered.

When a strong wave action is present, the rising water level will result in the anchor line upending the swim marker 10 on one end which is attached to the anchor line.

The fixed length of the anchor line will retain the attached left-hand side of the swim marker 10 at a predetermined water level. Therefore, when the water level rises, the unattached right-hand side of the swim marker 10 will be rotated about the clipped attachment of the anchor line. The rotation of the swim marker 10 begins from a first position at which the swim maker 10 is laying on the surface of the water. The rotation of the swim marker 10 ends at a second position at which the swim marker 10 is fully upended in vertical position above the submerged weight. Therefore, two of the highly visible arms 21, 23 are now in an elevated position above the surface of the water whilst the ends of the other arms 20, 22 may be submerged. The elevated arms 21, 23 may further assist the angler in determining the position of the marker and its associated fishing spot when strong waves and associated chop are present.

The easy attachment of the fixed anchor line to a clip positioned off-centre and about an axis perpendicular to the spooling/unspooling axis prevents the swim marker 10 from revolving in such conditions and/or prevents significant spooling/unspooling of the anchor line. The revolving of known swim markers which comprise a centrally wrapped anchor line have the known problem of dispensing more anchor line which causes the float to drift from the submerged weight and therefore provide an inaccurate indication of the fishing spot.

As shown in Figure 1, the swim marker 10 can be provides in different dimensions to suit the conditions and the size of weight etc. Specifically, the floating body 34 is sized to provide the required amount of positive buoyancy that is suitable for the depth of a required fishing spot. Therefore, a smaller floating body 34 may be used at shallower depths where a shorter anchor line will be required. Therefore, less buoyancy will be required to unravel the anchor line from the submerged swim marker.

## Claims

1. A fishing location marking device comprising a floating body and anchor line retaining means wherein an anchor line is arranged, in use, to extend from the floating body to a submerged weighted component in order to retain the floating body in a marking position on a surface of a body of water relative to the weighted component, the floating body comprising:
a first arm, a second arm, a third arm and a fourth arm,
a body portion providing an anchor line spooling portion comprising a circumferential spooling surface on a central portion of the floating body,
wherein the first arm, the second arm, the third arm and the fourth arm extend radially outwardly from the central portion and form a substantially X-shaped body,
wherein the anchor line retaining means fixes a length of anchor line extending between the anchor line retaining means and the weighted component, and
wherein the circumferential spooling surface is fixed and unmovable relative to the arms.

2. A fishing location marking device according to Claim 1 in which the anchor line retaining means being is located on a surface between the first arm and the third arm and in which the circumferential spooling surface locates around a central section of the central portion of the floating body and comprises a first spooling surface area located between the first arm and the second arm and also a spooling surface area located between the third arm and the fourth arm.

3. A fishing location marking device according to Claim 2 in which the first spooling surface area is concave and the second spooling surface area is concave and in which the first spooling surface area smoothly transitions with outer surfaces of the first arm and the second arm and the second spooling area smoothly transitions with outer surfaces of the third arm and the fourth arm.

4. A fishing location marking device according to Claim 1 or Claim 2 in which the first arm and the second arm provide guide surfaces to guide the anchor line between the first arm and the second arm and towards the first spooling surface area and the third arm and the fourth arm provide guide surfaces to guide the anchor line between the third arm and the fourth arm and towards the second spooling surface area.

5. A fishing location marking device according to any preceding claim in which the spooling surface is arranged to spool the anchor line about a spooling axis and wherein a location of the anchor line retaining means is positioned along the spooling axis.

6. A fishing location marking device according to any preceding claim in which the anchor line retaining means is located in a first plane and the spooling surface is located along a spooling plane, wherein the spooling plane is perpendicular to the first plane and in which a distal end of each arm is spaced further from the spooling plane compared to the first plane.

7. A fishing location marking device according to any preceding claim in which an angle between the first arm and the second arm is greater than the angle between the first arm and the third arm and wherein the anchor line is arranged to be spooled between the first arm and the second arm and the anchor line retaining means is located between the first arm and the third arm.

8. A fishing location marking device according to any preceding claim in which each arm extends radially along a central associated axis and each arm extends linearly along the associated central axis.

9. A fishing location marking device according to any preceding claim in which the X-shaped body has rotational symmetry of order two about a plan view central axis.

10. A fishing location marking device according to any preceding claim in which each arm has the same radial length.

11. A fishing location marking device according to any preceding claim in which the anchor line retaining means comprises a line clip and in which the anchor line retaining means is operable to adjust the length of an anchor line extending between the floating body and a weighted component.

12. A fishing location marking device according to any preceding claim in which the anchor line retaining means is integral with the floating body and wherein the floating body and the anchor line retaining means are integral and are formed as a single unitary component.

13. A fishing location marking device according to any preceding claim in which the anchor line retaining means comprising a first retaining member and a second retaining member with a passageway defined therebetween, the first retaining member and the second retaining member are biased towards each other and a part of the first retaining member is arranged to contact a part of the second retaining member and the passageway is defined between the un-contacting portions of the first retaining member and the second retaining member, and in which each retaining member comprises a stem extending from the central portion of the X-shaped body to a respective distal end and each stem extends from a surface of the central portion located between the first arm and the third arm and wherein each retaining member comprises a resilient member which is arranged to resilient flex to define an inlet whereby a part of the anchor line can be inserted into the passageway.

14. A fishing assembly comprising a fishing location marking device, an anchor line and a weighted component, the fishing location marking device comprising a floating body and anchor line retaining means wherein the anchor line is arranged, in use, to extend from the floating body to the submerged weighted component in order to retain the floating body in a marking position on a surface of a body of water relative to the weighted component, the floating body comprising:
a first arm, a second arm, a third arm and a fourth arm,
a body portion providing an anchor line spooling portion comprising a circumferential spooling surface on a central portion of the floating body,
wherein the first arm, the second arm, the third arm and the fourth arm extend radially outwardly from the central portion and form a substantially X-shaped body,
wherein the anchor line retaining means fixes a length of the anchor line extending between the anchor line retaining means and the weighted component, and
wherein the circumferential spooling surface is fixed and unmovable relative to the arms.

15. A method of marking a fishing location with a fishing assembly comprising a fishing location marking device, an anchor line and a weighted component, the fishing location marking device comprising a floating body and anchor line retaining means, the floating body comprising:
a first arm, a second arm, a third arm and a fourth arm,
a body portion providing an anchor line spooling portion comprising a circumferential spooling surface on a central portion of the floating body,
wherein the first arm, the second arm, the third arm and the fourth arm extend radially outwardly from the central portion and form a substantially X-shaped body,
wherein the anchor line retaining means fixes a length of the anchor line extending between the anchor line retaining means and the weighted component, and
wherein the circumferential spooling surface is fixed and unmovable relative to the arms,
the method comprising:
positioning the fishing location marking device on a surface of water and allowing the weighted component to rest on a submerged surface at a fishing location,
adjusting the length of the anchor line extending from the floating body to the submerged weighted component in order to retain the floating body in a marking position on a surface of a body of water relative to the weighted component.
